# EUROPEAN PATENT APPLICATION

(11) **EP 1 477 300 A2**
(43) Date of publication of application: **17.11.2004**
(21) Application number: 04010325.1
(22) Date of filing: 30.04.2004
(51) Int. Cl.: B32B 5/26

(54) **Layered reinforced product based on non-woven fabric, particularly for bituminization, and method for producing the product**

(30) Priority: 13.05.2003 IT PD20030100
(71) Applicant: O.R.V. OVATTIFICIO RESINATURA VALPADANA S.p.A., 35010 Grantorto (Padova) (IT)
(72) Inventor: Peruzzo, Maurizio, 36061 Bassano Del Grappa (IT)
(74) Representative: Modiano, Guido, Dr.-Ing.

(57) **Abstract**

A reinforced layered product based on non-woven fabric, which comprises:
-- at least one first ply (10) of non-woven fabric made of polyester fibers predominantly orientated along a predefined direction;
-- at least one second ply (11) chosen between a non-woven fabric made of polyester fibers that are predominantly orientated at right angles to the at least one first ply and melt at a lower temperature, and a layer of a hot-melt adhesive;
-- at least one third ply (12) of non-woven fabric made of polyester fibers predominantly orientated along the direction of predominant orientation of the at least one first ply;
-- at least one net (13) of glass fibers arranged between two plies having different orientations selected among the at least one first ply (10), the at least one second ply (11), and the at least one third ply (13);
the fibers of the at least one second ply (11) or of the layer of hot-melt adhesive being bonded by heat with the other plies (10, 12) that are in contact with them, the entire assembly being consolidated by means of resin.

## Description

The present invention relates to a reinforced layered product based on non-woven fabric.

The product is used particularly but not exclusively as a bituminization mat.

The present invention also relates to a method for manufacturing the layered product.

Mats for bituminization, made of layered non-woven fabric of polyester fibers, are already known.

These mats are generally composed of three plies of non-woven fabric of polyester fibers, with a melting temperature of approximately 255 °C, a count of 4.4 dtex and a size of 76 mm, which are superimposed and in which the central ply is formed by a carding machine that arranges the fibers predominantly longitudinally with respect to the direction of advancement of production and the external plies are produced by respective carding machines that arrange the fibers predominantly in a transverse direction.

Each ply constitutes, in terms of weight, one third of the total weight of the assembly.

The assembly is subjected to consolidation by passing through three needle punches arranged in series and is then treated with resin and dried in an oven and finally rolled up in rolls.

A product of this type weighs no less than 140 g/m², of which approximately 20% is constituted by the resin.

Lower unit weights are not considered, since they would lead to great shrinkage both during bitumen impregnation and during laying.

The resin treatment is in fact designed to minimize shrinkage, but can nonetheless be insufficient for this purpose.

For this reason, and also in view of research into reducing the quantity of resin, which is a very expensive raw material, it is known to reinforce the non-woven fabric mat with glass fibers embedded in various manners between the various layers and thus bonded to the assembly.

The methods used so far have led to improvements, but have not yielded results that can be considered optimum.

The aim of the present invention is to provide a reinforced layered product based on non-woven fabric that has improved stability with respect to shrinkage in all directions and contains a reduced amount of resin.

Within this aim, an object of the present invention is to provide a reinforced layered product based on non-woven fabric that can be produced with a method that is advantageous with respect to current methods in terms of productivity per hour.

Another object is to provide a reinforced layered product based on non-woven fabric that can be produced without particular technological complications with respect to known products.

A further object is to provide a reinforced layered product based on non-woven fabric whose cost for raw materials is not higher than that of current products.

A still further object is to provide a reinforced layered product based on non-woven fabric that can be produced by using current facilities.

This aim and these and other objects that will become better apparent hereinafter are achieved by a reinforced layered product based on non-woven fabric, characterized in that it comprises:
-- at least one first ply of non-woven fabric made of polyester fibers predominantly orientated along a predefined direction;
-- at least one second ply chosen between a non-woven fabric made of polyester fibers that are predominantly orientated at right angles to said at least one first ply and melt at a lower temperature, and a layer of a hot-melt adhesive that melts at a lower temperature;
-- at least one third ply of non-woven fabric made of polyester fibers predominantly orientated along the direction of predominant orientation of said at least one first ply;
-- at least one net of glass fibers arranged between two plies having different orientations selected among said at least one first ply, said at least one second ply, and said at least one third ply
the fibers of said at least one first ply and said at least one third ply being bonded by heat;
-- to the fibers of said at least one second ply that are in contact with them, when said second ply is constituted by a non-woven fabric made of polyester fibers;
-- to said layer of a hot-melt adhesive, when said at least one second ply is constituted by said layer of adhesive
the entire assembly being consolidated by means of resin.

Advantageously, the method for producing said reinforced layered product based on non-woven fabric with said at least one second ply constituted by a non-woven fabric made of polyester fibers comprises the steps of:
-- feeding a carding machine that lies transversely to a direction of advancement of the product with said at least one first ply and at least one third ply of non-woven fabric of polyester fibers predominantly orientated transversely and a longitudinal carding machine with said at least one second ply of non-woven fabric of polyester fibers that have a predominant longitudinal orientation and melt at a lower temperature than the preceding ones;
-- arranging at least one net of glass fibers at least between one of said plies with predominant transverse orientation and the ply with predominant longitudinal orientation;
-- calendering the assembly at the temperature at which said at least one ply with predominant longitudinal orientation softens, consolidating it and bonding said at least one glass fiber net;
-- resin-treating the assembly and drying it.

Equally advantageously, the method for producing said reinforced layered product based on non-woven fabric with said at least one second ply constituted by a layer of hot-melt adhesive comprises the steps of:
-- feeding a carding machine that lies longitudinally with respect to the advancement direction of the product with said at least one first ply and said at least one third ply made of non-woven fabric of polyester fibers with predominant transverse orientation;
-- spreading said layer of hot-melt adhesive on the inner side of one of said at least one first ply and at least one third ply;
-- arranging said at least one net of glass fibers between said at least one first ply and said at least one third ply;
-- calendering the assembly at the softening temperature of said layer of hot-melt adhesive, consolidating and bonding said at least one glass fiber net;
-- resin-treating the assembly and drying it.

Further characteristics and advantages of the present invention will become better apparent from the following detailed description of a preferred but not exclusive embodiment thereof and of its production method, given by way of non-limiting example in the accompanying drawings, wherein:

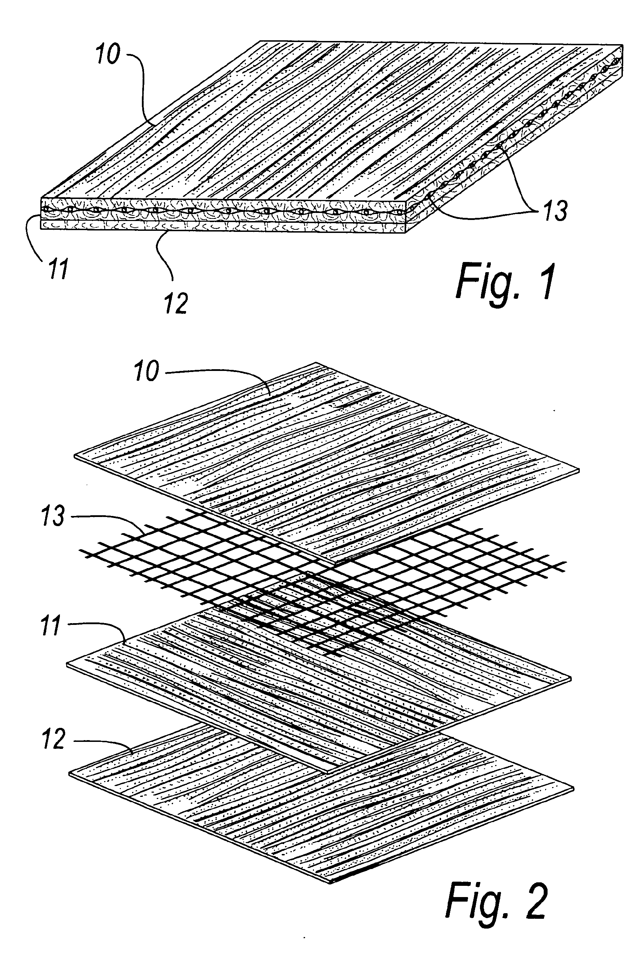

Figure 1 is a schematic perspective view of a layered product according to the invention;
Figure 2 is an exploded perspective view of the main components of the product of Figure 1.

With reference to the figures, a reinforced layered product based on non-woven fabric comprises at least one first ply 10 of non-woven fabric made of polyester fibers with predominant orientation along a predefined direction.

Preference is given to a ply with a count of 4.4 dtex, a size of 76 mm, a weight of 45 g/m², and a melting temperature of approximately 255 °C.

The product further comprises at least one second ply 11 chosen between a non-woven fabric of polyester fibers that are predominantly orientated at right angles to said at least one first ply 10 and melt at a lower temperature, and a layer of a hot-melt adhesive that likewise melts at a lower temperature.

Preference is given in this case to a ply with a count of 4.4-6.7 dtex, a size of 76 mm, a weight of 10 g/m², and a melting temperature of approximately 234 °C.

The layer of low-melt adhesive is based on at least one among polyester, polyurethane, acrylates and the like.

The product further comprises at least one third ply 12 of non-woven fabric made of polyester fabrics that are predominantly orientated along the direction of predominant orientation of said at least one first ply 10 and have the same characteristics as said first ply.

At least one net 13 of glass fibers weighing approximately 8 g/m² is arranged between two differently orientated plies among said at least one first ply 10, at least one second ply 11, and at least one third ply 12.

The glass fiber net 13 can have various denier counts and be manufactured in various manners, but by way of example it is possible to use a net with a warp having a count of 340 dtex and 1.6 filaments per cm, and a weft having a count of 340 dtex and 0.4 filaments per cm, the entire system being bonded by polyvinyl alcohol.

The fibers of the at least one second ply 11 are thermally bonded to the fibers of the other plies 10 and 13 that are in contact with them, and the entire assembly is resin-treated with resin preferably in an amount of approximately 12 g/m², i.e., approximately 10% of the weight of the assembly.

The production method of the reinforced layered product based on non-woven fabric comprises, if the second ply 11 is constituted by a non-woven fabric of polyester fibers, a first step in which a carding machine that lies transversely to the direction of advancement of the product is fed with the at least one first ply 10 and at least one third ply 12 of non-woven fabric of polyester fibers having a predominantly transverse orientation, and a longitudinal carding machine is fed with the at least one second ply 11 of non-woven fabric of polyester fibers that have a predominantly longitudinal orientation and melt at a lower temperature than the preceding plies.

At the same time, the at least one net 13 of glass fibers is arranged between one of the plies having a predominant transverse orientation 10 and 12 and the ply 11 that has a predominant longitudinal orientation, and the assembly is pre-needle punched enough to allow transport to a calendering machine that is heated to approximately 210° C, a temperature at which the at least one ply 11 with predominant longitudinal orientation softens and, by being of the same kind as the fibers that constitute the transverse plies 10 and 12, leads to a consolidation of the assembly, also bonding the at least one glass fiber net 13.

If the second ply 11 is constituted by a layer of hot-melt adhesive, which also melts at a lower temperature than the first ply 10 and the third ply 12, the production method comprises a first step in which a carding machine that lies longitudinally with respect to the product advancement direction is fed with the at least one first ply 10 and the at least one third ply 12.

Such layer of hot-melt adhesive is applied to the inner side of one of the at least one first ply 10 and the at least one third ply 12.

Such at least one net of glass fibers is then arranged between the at least one first ply 10 and the at least one third ply 12.

The assembly is calendered at the softening temperature of said layer of hot-melt adhesive, consolidating it and bonding said at least one glass fiber net.

The resulting intermediate component is therefore a thermally-bonded reinforced non-woven fabric, which in the final step of both processes is resin-treated, dried in an oven and then rolled into rolls.

The resin treatment is designed to minimize shrinkage both during bituminization and during installation.

The presence of the glass fiber net improves shrinkage stability in all directions and leads to a reduced need for resin with respect to known types (10% of total weight with respect to 20%).

Consolidation with thermal calendering provides advantages in terms of productivity per hour, since it is well-known that the bottleneck of needle-punched non-woven fabrics is constituted by the needle punches.

In the present case, only pre-needle punching is performed, exclusively in order to allow transport to the calendering machine.

In practice it has been found that the present invention has achieved the intended aim and objects.

All the technical details may be replaced with other technically equivalent elements.

The materials, so long as they are compatible with the contingent use, as well as the dimensions, may be any according to requirements.

The disclosures in Italian Patent Application No. PD2003A000100 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A reinforced layered product based on non-woven fabric, **characterized in that** it comprises:
-- at least one first ply (10) of non-woven fabric made of polyester fibers predominantly orientated along a predefined direction;
-- at least one second ply (11) chosen between a non-woven fabric made of polyester fibers that are predominantly orientated at right angles to said at least one first ply (10) and melt at a lower temperature, and a layer of a hot-melt adhesive that melts at a lower temperature;
-- at least one third ply (12) of non-woven fabric made of polyester fibers predominantly orientated along the direction of predominant orientation of said at least one first ply (10);
-- at least one net (13) of glass fibers arranged between two plies having different orientations selected among said at least one first ply (10), said at least one second ply (11), and said at least one third ply (13)
the fibers of said at least one first ply (10) and of said at least one third (12) ply being bonded by heat
-- to the fibers of said at least one second ply (11) that are in contact with them, when said second ply (11) is constituted by a non-woven fabric made of polyester fibers
-- to said layer of a hot-melt adhesive, when said at least one second ply (11) is constituted by said layer of adhesive
the entire assembly being consolidated by means of resin.

2. The reinforced layered product based on non-woven fabric according to claim 1, **characterized in that** said at least one first ply (10) and said at least one third ply (12) have substantially a count of 4.4 dtex, a size of 76 mm, a weight of 45 g/m², and a melting temperature of approximately 255 °C.

3. The reinforced layered product based on non-woven fabric according to claim 1, **characterized in that** said at least one second ply (11) of non-woven fabric made of polyester fiber substantially has a count of 4.4-6.7 dtex, a size of 76 mm, a weight of 10 g/m², and a melting temperature of approximately 234 °C.

4. The reinforced layered product based on non-woven fabric according to claim 1, **characterized in that** said layer of a hot-melt adhesive is based on at least one among polyester, polyurethane, acrylates and the like.

5. The reinforced layered product based on non-woven fabric according to claim 1, **characterized in that** said net (13) of glass fibers has a weight of approximately 8 g/m².

6. The reinforced layered product based on non-woven fabric according to claim 1, **characterized in that** said glass fiber net (13) has a warp count of 340 dtex and 1.6 filaments per cm and a weft count of 340 dtex, and 0.4 filaments per cm, the entire system being adhesive-bonded by means of polyvinyl alcohol.

7. The reinforced layered product based on non-woven fabric according to claim 1, **characterized in that** said resin is present in an amount approximately equal to 10% by weight of the total.

8. A method for producing a reinforced layered product based on non-woven fabric comprising the steps of:
-- feeding a carding machine that is orientated transversely to an advancement direction of a product with at least one first ply and at least one third ply of non-woven fabric made of polyester fibers having a predominant transverse orientation, and feeding a longitudinal carding machine with at least one second ply of non-woven fabric made of polyester fibers that have a predominant longitudinal orientation and melt at a lower temperature than the first and third plies;
-- arranging at least one net of glass fibers at least between one of said first and third plies with predominant transverse orientation and the second ply with predominant longitudinal orientation;
-- calendering said first, second, third plies and said at least one net at a softening temperature of said at least one ply with predominant longitudinal orientation, consolidating them and bonding them to said at least one glass fiber net, obtaining an assembly;
-- treating the assembly with resin and drying the assembly.

9. The method according to claim 8, which comprises, before the calendering step, the step of pre-needle punching the assembly enough to allow transport to the calendering machine.

10. The method according to claim 8, **characterized in that** calendering is performed at approximately 210 °C.

11. A method for producing reinforced layered product based on non-woven fabric, comprising the steps of:
-- feeding a carding machine that is orientated longitudinally with respect to a direction of advancement of a product with at least one first ply and with at least one third ply made of non-woven fabric made of polyester fibers that have a predominant transverse orientation;
-- applying a layer of hot-melt adhesive to an inner side of one of said at least one first ply and said at least one third ply;
-- arranging between said at least one first ply and at least one third ply at least one glass fiber net;
-- calendering said first, second and third plies and said at least one net at a softening temperature of said hot-melt adhesive, consolidating them and bonding said at least one glass fiber network, obtaining an assembly;
-- resin-coating the assembly and drying the assembly.

12. The method according to claim 9, which comprises, before the calendering step, the step of pre-needle punching the assembly enough to allow transport to the calendering machine.

13. The method according to claim 9, **characterized in that** calendering is performed at approximately 210 °C.
